Europäisches Patentamt

European Patent Office

Office européen des brevets

(11) Veröffentlichungsnummer: **0 071 074**
**A2**

(12) # EUROPÄISCHE PATENTANMELDUNG

(21) Anmeldenummer: 82106274.2

(22) Anmeldetag: 17.07.82

(51) Int. Cl.³: **E 02 B 5/02**

(30) Priorität: 23.07.81 DE 3129060

(43) Veröffentlichungstag der Anmeldung:
09.02.83 Patentblatt 83/6

(84) Benannte Vertragsstaaten:
BE FR GB NL

(71) Anmelder: Mannesmann AG
Mannesmannufer 2
D-4000 Düsseldorf 1(DE)

(72) Erfinder: Brüderle, Egon, Dipl.-Ing.
Wackenpfad 13
D-6660 Zweibrücken(DE)

(72) Erfinder: Wannemacher, Willibald, Ing. grad.
Zur Priminiusschule 22
D-6653 Bierbach(DE)

(54) Verfahren und Kanalbaulängsmaschine zum Einbauen von Auskleidungen in Wasserkanälen, z.B. in Bewässerungskanälen.

(57) Bei derartigen Verfahren zum Einbauen von Auskleidungen in Wasserkanälen wird mit Kanalbaulängsmaschinen gearbeitet, deren Auskleidungsleistung größer ist als diejenige von Quereinbaumaschinen. Da jedoch bei Längseinbaumaschinen nur kleinere Böschungsneigungen bearbeitet werden können, ist das Quereinbauverfahren in dieser Hinsicht dem Längseinbauverfahren von Auskleidungen überlegen.

Um auch im Längseinbauverfahren in Verbindung mit dessen hohen Einbauleistungen größere Böschungsneigungen bearbeiten zu können, wird vorgeschlagen, daß das Planieren und/oder das Verteilen, Verdichten sowie das Glätten des Auskleidungsmaterials an zumindest einer der Böschungsflächen (9a, 9b) jeweils kontinuierlich auf einer Böschungslinie (24) erfolgt, die in einem Winkelbereich (α) von etwa 15 bis 45° zur Horizontalen (23) liegt, wobei die zugehörigen Böschungswinkel (β) senkrecht zur Kanallängsachsenparallelen (22) im Winkelbereich von etwa 20° bis 60° zur Horizontalen (23') liegen.

Die Kanalbaulängsmaschine zur Durchführung dieses Verfahrens ist hierfür derart gestaltet, daß zumindest zwei Arbeitsgeräteträger (1, 2) mit ihren Arbeitswerkzeugen (13, 19a; 14, 19b) auf der von unten nach oben schräg ansteigenden Böschungslinie (24) in Kanallängsrichtung (28) im Abstand aufeinanderfolgend und auf der Geraden parallel zueinander verlaufend angeordnet sind.

./...

Fig.1

Die Erfindung betrifft ein Verfahren und die zugehörige Kanalbaulängsmaschine zum Einbauen von Auskleidungen in Wasserkanälen, z. B. in Bewässerungskanälen, bei dem zum Planieren der Oberfläche sowie zum Verteilen, Verdichten und Glätten des eingebrachten Auskleidungsmaterials die Kanalbaumaschine in Kanallängsrichtung bewegt wird.

Das jeweils angewendete Auskleidungsverfahren ist mit der Gestaltung der Kanalbaumaschine weitgehend verbunden. Umgekehrt bedingt das angewendete Auskleidungsverfahren eine bestimmte bauliche Gestaltung unter Berücksichtigung bestimmter Funktionen der Kanalbaumaschine.

Das bisher bekannte Verfahren, Kanalauskleidungen im Längseinbau herzustellen, beruht auf kontinuierlichen Arbeitsverfahren, die auf einer senkrecht zur Kanallängsachse verlaufenden Querlinie in Richtung der Kanallängsachse gleichzeitig fortschreitend stattfinden.

Es wird wegen der unterschiedlichen Leerlaufzeiten davon ausgegangen, daß Kanalbaulängsmaschinen gegenüber Quereinbaumaschinen erheblich größere Flächenleistungen erbringen. Allerdings steigt auch der maschinentechnische Aufwand bei diesen Kanalbaulängsmaschinen mit der Auskleidungsbreite schneller an als bei Quereinbaumaschinen, weshalb je nach dem Mechanisierungsgrad die Kanalbaulängsmaschine erst oberhalb einer Mindestkanallänge wirtschaftlich einsetzbar ist.

Ein weiterer, jedoch verfahrenstechnisch bedeutsamer Unterschied besteht bei den beiden verwendeten Arten von Einbaumaschinen in bezug auf maximal zulässige Neigungen der zu verkleidenden Böschung. Unter Zugrundelegung gleicher Eigenschaften der verwendeten Auskleidungsmaterialien kann im Quereinbauverfahren eine bis ca. 15° größere Böschungsneigung als im Längseinbauverfahren hergestellt werden. Demzufolge ergibt sich für das Quereinbauverfahren der Vorteil einer größeren zulässigen Böschungsneigung, jedoch der Nachteil einer geringeren Arbeitsleistung und für das Längseinbauverfahren eine geringere zulässige Böschungsneigung, jedoch bei großen Arbeitsvolumen ein äußerst wirtschaftliches Arbeiten.

. . . . .

Von erheblicher Bedeutung ist jedoch die praktische Feststellung, die Böschungsneigung eines Kanals den Bodenverhältnissen entsprechend steil vorzusehen.

Stand der Technik ist ein Längseinbauverfahren (DE-PS 28 40 800 - IPC E 02 B 5/02), bei dem in kontinuierlicher Arbeitsweise in Kanallängsrichtung die Kanalbaumaschine vorgeschoben wird, so daß kontinuierlich quer zur Kanallängsrichtung innerhalb der Kanalbaumaschine befördertes Auskleidungsmaterial als Auskleidungsschicht von konstanter Stärke aufgebracht werden kann. Für dieses Längseinbauverfahren gelten die angegebenen Regeln der Arbeitsleistung bzw. der technischen Nachteile.

Ferner ist für die Arbeitsweise in Längsrichtung und gleichzeitig in einem diskontinuierlichen Verfahrensgang in Kanalquerrichtung das Aufbringen des Auskleidungsmaterials bekannt (Aufsatz "Moderne Maschinen für den Böschungs- und Kanalbau" - "Baumaschinen + Bautechnik", 6. Juni 1978, Seiten 317 ff). Zu diesem Quereinbauverfahren wurde als Nachteil die relativ geringe Einbauleistung festgestellt.

Der vorliegenden Erfindung ist die Aufgabe zugrundegelegt, ein Verfahren und die zugehörige Kanalbaulängsmaschine vorzuschlagen, die bei den erreichbaren Werten für die Arbeitsleistung von Längsmaschinen größere Böschungswinkel zu bearbeiten imstande sind als dies bei bisher üblichen Längsauskleidungsverfahren bekannt ist.

Die gestellte Aufgabe wird erfindungsgemäß dadurch gelöst, daß das Planieren und/oder das Verteilen, Verdichten sowie das Glätten des Auskleidungsmaterials an zumindest einer der Böschungsflächen jeweils kontinuierlich auf einer Böschungslinie erfolgt, die in einem Winkelbereich von etwa 15 bis 45° zur Horizontalen liegt, wobei die zugehörigen Böschungswinkel senkrecht zur Kanallängsachsenparallelen im Winkelbereich von etwa 20° bis 60° zur Horizontalen liegen. Dieses Verfahren verbindet gleichzeitig die hohen Einbauleistungen des Längsauskleidungsverfahrens mit einer erheblichen Steigerung der zulässigen Böschungswinkel und vermag somit die positiven Eigenschaften einer Kanalbaulängsmaschine mit einer Kanalbauquermaschine zu vereinigen.

. . . . . .

Die praktische Anwendung des erfindungsgemäßen Verfahrens kann nach einem weitergehenden Gedanken derart durchgeführt werden, daß auf der Böschung quer zur Kanallängsachsenparallelen die tieferliegende Auskleidung vor der höherliegenden Auskleidung aufgetragen wird.

Das erfindungsgemäße Verfahren berücksichtigt außerdem unterschiedliche Teilarbeitsgänge, wie z. B. Planieren, Verteilen und Verdichten sowie das Glätten. Eine dieser Teilaufgaben wird dadurch gelöst, daß das Material auf der schrägen Böschungslinie von unten nach oben oder umgekehrt gefördert wird. Das Verfahren ist durch Reversieren der Förderschnecken geeignet, überschüssiges Auskleidungsmaterial an gewünschte Stellen zu transportieren bzw. dessen gleichmäßige Verteilung vorzunehmen.

Die Kanalbaulängsmaschine zur Durchführung des erfindungsgemäßen Verfahrens ist dahingehend gestaltet, daß zumindest zwei Arbeitsgeräteträger mit ihren Arbeitswerkzeugen auf der von unten nach oben schräg ansteigenden Böschungslinie in Kanallängsrichtung im Abstand aufeinanderfolgend und auf geraden Kanalstrecken parallel zueinander verlaufend angeordnet sind. Es ist möglich, die beiden Arbeitsgeräteträger in unterschiedlichen Winkelbereichen von etwa 15 bis 45° zur Horizontalen einzustellen (Winkel $\alpha$).
Für mit Kurvenabschnitten versehene Ausbaustrecken ist ferner vorteilhaft, daß der in Fahrtrichtung erste Arbeitsgeräteträger um einen Gelenkpunkt im Winkel zur Längsachse des nachfolgenden Arbeitsgeräteträgers einstellbar ist.

Beide Kanalböschungen lassen sich gleichzeitig bearbeiten, indem Paare von Arbeitsgeräteträgern in Pfeilform angeordnet und mittels des Gelenkes miteinander verbunden sind.

Die Kurvenabschnitte des vorgesehenen Wasserkanals, z.B. Entwässerungskanals, werden nach der weiteren Erfindung dadurch erzeugt, daß der Ausschwenk-Winkel zwischen Paaren von Arbeitsgeräteträgern gemäß der Formel

. . . . .

$$\tan \frac{\gamma}{2} = \frac{\varrho \pm \sqrt{\varrho^2 - (e+f)(e-f)}}{e - f}$$

festgelegt ist, wobei (jeweils auf den Kanalgrundriß bezogen) bedeuten:

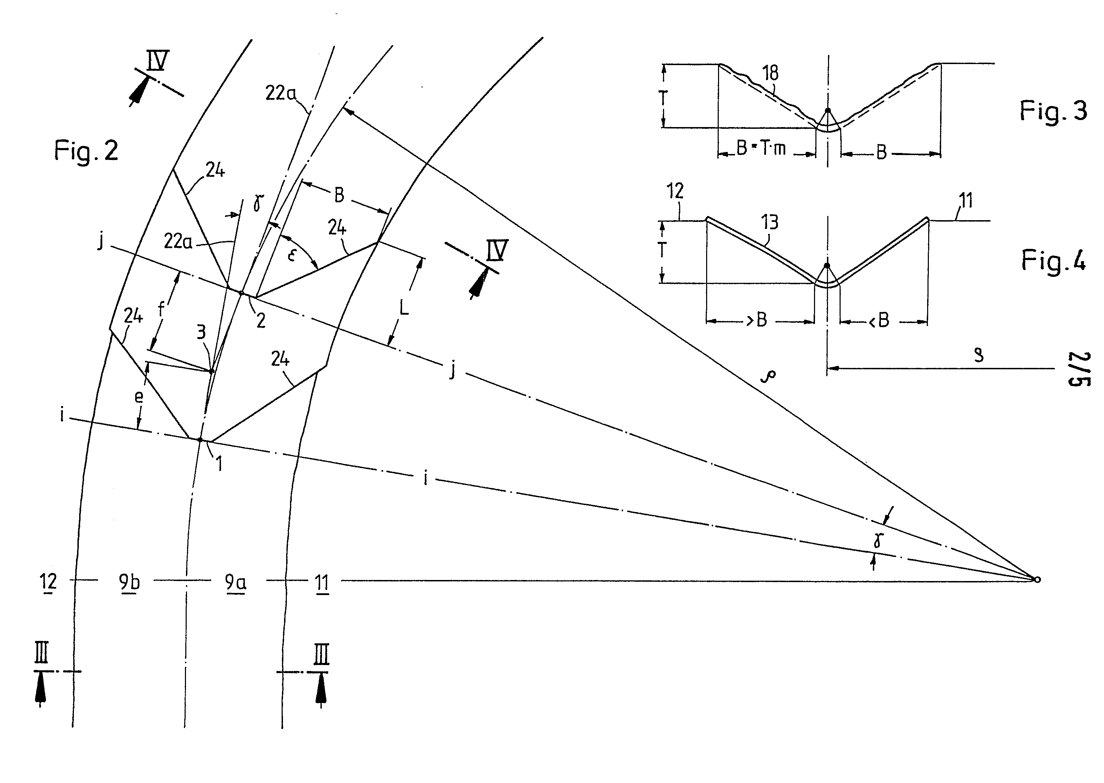

e = Abstand zwischen dem Gelenk G und der Arbeitslinie i-i (Fig. 2)

f = Abstand zwischen dem Gelenk G und der Arbeitslinie j-j (Fig. 2)

$\varrho$ = Radius der Kurvenstrecke

$\gamma$ = Ausschwenk-Winkel zwischen Paaren von Arbeitsgeräteträgern, um eine gleichbleibende Auskleidungsdicke in Kurven an den Böschungen zu ermöglichen.

Die Fahrstabilität der Kanalbaulängsmaschine wird ferner dadurch verbessert, daß der Gelenkpunkt mit dem Schwerpunkt des in Fahrtrichtung ersten Arbeitsgeräteträger-Paares bei entsprechend festgelegten Werten für "e" und "f" zusammenfällt.

Ein anderes Merkmal der erfindungsgemäßen Kanalbaulängsmaschine besteht darin, daß die Fahrwerke zwischen den aufeinanderfolgenden Arbeitsgeräteträgern angeordnet sind.

Ein anderes Merkmal der erfindungsgemäßen Kanalbaulängsmaschine, das einem einzelnen Arbeitsgang dient, ist derart vorgesehen, daß die Arbeitswerkzeuge zum Planieren aus langgestreckten Schneckenfräsern mit Materialführungen bestehen. Solche Elemente dienen gleichzeitig zwei Funktionen: dem Planieren und dem Verteilen.

Oberschüssiges Auskleidungsmaterial kann ferner dadurch abgeführt werden, indem die Schneckenfräser mit Schneckentrögen über die Kanalberme hinaus verlängert sind.

Für die weiteren von der Kanalbaulängsmaschine auszuführenden Arbeiten ist vorgesehen, daß zum Verlegen bzw. Verdichten des Auskleidungsmaterials Förderschnecken vorgesehen sind.

. . . . .

Das Verdichten erfolgt vorteilhafterweise mit der erfindungsgemäßen
Kanalbaulängsmaschine, bei der die Förderschnecken mit einem Vibrationsantrieb verbindbar sind, der Schwingungen in Achsrichtung überträgt.

Die Vorteile des erfindungsgemäßen Verfahrens sind insgesamt betrachtet
neben den im Längseinbauverfahren zu erzielenden größeren Böschungswinkeln
der besondere Stützeffekt, bei dem zusammen mit einer variablen Fahrgeschwindigkeit das plastifizierte Auskleidungsmaterial in der Weise gestützt
werden kann, daß die frisch hergestellte Böschungsfläche stabil stehen
bleibt.

Die Vorteile der erfindungsgemäßen Kanalbaulängsmaschine bestehen in einer
wesentlichen Verminderung des Aufwandes, in einer größeren Vielseitigkeit
in bezug auf das Auskleidungsmaterial, in einer einfacheren Anpaßbarkeit
an verschiedene Böschungsneigungen, in einer guten Zugänglichkeit und verminderten Wartungsanforderungen. Hierbei ist beachtlich, daß für die
Betoniervorrichtungen die vorderen Wände und Zwischenwände der Vibrationskammern entfallen, die Verdichtungseinrichtung wesentlich einfacher und mit
weniger Aufwand verbunden ist, daß ferner für Asphalteinbau eine im Grunde
der Betoniereinrichtung entsprechende Ausrüstung verwendbar ist, sofern
diese zusätzlich mit den entsprechenden Heiz- und Isolierflächen ausgestattet wird, und daß die Arbeitsgeräteträger wesentlich einfacher als
bisher von einer Böschungsneigung auf eine andere umgerüstet werden können.
Durch die pfeilförmige Anordnung der Arbeitsgeräteträger und die darin
arbeitenden Werkzeuge, erzeugen die Reaktionskräfte der im Zusammenhang mit
dem Materialtransport bzw. Auskleidungsmaterialtransport auf der Böschung
auftretenden Förderwiderstände in Fahrtrichtung entsprechende Kraftkomponenten, die zugleich die Traktion der Kanalbaulängsmaschine unterstützen. Aufgrund der Feststellung, daß herkömmliche Maschinen nicht selten
besondere Einrichtungen für ausreichende Traktion erfordern und die erfindungsgemäße Kanalbaulängsmaschine trotzdem als eine an Gewicht sparende
Maschine verwirklicht werden kann, trägt die pfeilförmige Anordnung der
Arbeitsgeräteträger zur Entlastung der Fahrwerke bei.

Die einfachen und stabilen Arbeitsgeräteträger ermöglichen ferner durch
ihre Art der Aufhängung jeweils durch Schwenken um ihre durch den Anschlußpunkt zur gerundeten Kanalsohle verlaufenden Längsachse eine relativ
leichte stufenlose Anpaßbarkeit an die Böschungsneigung. Besonders günstig
wird dabei die konstruktive Gestaltung der Kanalbaulängsmaschine, wenn für
alle erforderlichen Neigungen die gerundete Kanalsohle konstant bleibt und
am Übergang in die ebene Böschung je nach dem Neigungswert (m) ein
entsprechender Knick entsteht. Diese geringfügige Abweichung von der gewählten Grundform des Kanalquerschnitts, die keinen tangentialen Übergang
aufweist, führt zu keinerlei bautechnischen Nachteilen. Ferner ist vorteilhaft, daß die erfindungsgemäße Kanalbaulängsmaschine auch für Asphalt
eingesetzt werden kann.

Die nach einer Seite und nach oben hin völlig offene Bauweise der Arbeitsgeräteträger ermöglicht in Verbindung mit der pfeilförmigen Anordnung und
dem über der Maschinenmitte befindlichen Führerhaus, dem Bedienungsmann
eine gute Beobachtung und Steuerung der Betriebsvorgänge.

Die erfindungsgemäße Kanalbaulängsmaschine führt zu einer Vereinfachung
des Einbringens des Auskleidungsmaterials. In Verbindung mit den in dieser
Einbauvorrichtung verwendeten Förderschnecken, die dem Tixotropie-Verhalten
des Auskleidungsmaterials entsprechend auch unter dem anpaßbaren Einfluß
von Vibrationen zur Verdichtung dienen, ergibt sich einerseits eine einfache vorteilhafte Konstruktion, andererseits aber auch eine effektive,
wartungsfreundliche und durch gute Beobachtungsmöglichkeiten begünstigte
Betriebsweise.

Insbesondere stehen die Förderwirkung und Plastizität des die Förderschnecken umgebenden Auskleidungsmaterials in einem solch unmittelbaren
Zusammenhang zueinander, daß während des Fördervorganges auch ein
Vermischen und Homogenisieren innerhalb der gesamten Auskleidungsbreite
stattfindet. Aufgrund dieser Verfahrensvorgänge ist es vorteilhaft, daß
sich die Auskleidungsbedingungen für uneinheitliche Materialzusammensetzungen ebenfalls verbessern.

. . . . .

Mehrere Ausführungsbeispiele der Erfindung sind in der Zeichnung
dargestellt und werden im folgenden näher beschrieben. Es zeigen

Fig. 1 eine perspektivische Ansicht eines Ausschnittes aus einem gängigen
Typ eines Wasserkanals,

Fig. 2 einen schematisierten Grundriß der erfindungsgemäßen Kanalbaulängsmaschine gemäß Fig. 1 in einem Kurvenabschnitt befindlich,

Fig. 3 einen Querschnitt des Wasserkanals in der Geraden gemäß Schnittangabe III - III in Fig. 2,

Fig. 4 einen Querschnitt durch den Wasserkanal in der Kurve gemäß
Schnittangabe IV - IV in Fig. 2.

Fig. 5 einen Grundriß der wesentlichsten Baugruppen der erfindungsgemäßen
Kanalbaulängsmaschine,

Fig. 6 einen Querschnitt senkrecht zur Kanalmittellängsachse mit einer
Kanalbaulängsmaschine, die beide Böschungen gleichzeitig
bearbeitet, gemäß Schnittangabe VI - VI in Fig. 5.

Fig. 7 einen Schnitt durch die Planiervorrichtung gemäß Schnittangabe
VII - VII in Fig. 5,

Fig. 8 einen Schnit durch die Einbauvorrichtung gemäß Schnittangabe
VIII - VIII in Fig. 5,

Fig. 9 den Grundriß einer erfindungsgemäßen Kanalbaulängsmaschine auf einer
der beiden mit dieser Maschine zu bearbeitenden Böschungen,

Fig.10 eine Vorderansicht zu Fig. 9.

Die erfindungsgemäße Kanalbaulängsmaschine ist nach ihren Baugruppen in
eine Trägerkonstruktion, eine Planiervorrichtung und eine Einbauvorrichtung
gegliedert. Eine elektronisch geregelte Nivellier- und Lenkautomatik (nicht
beschrieben) ist ebenfalls vorgesehen.

. . . . .

21 024 - Fl/Schi

27.4.81

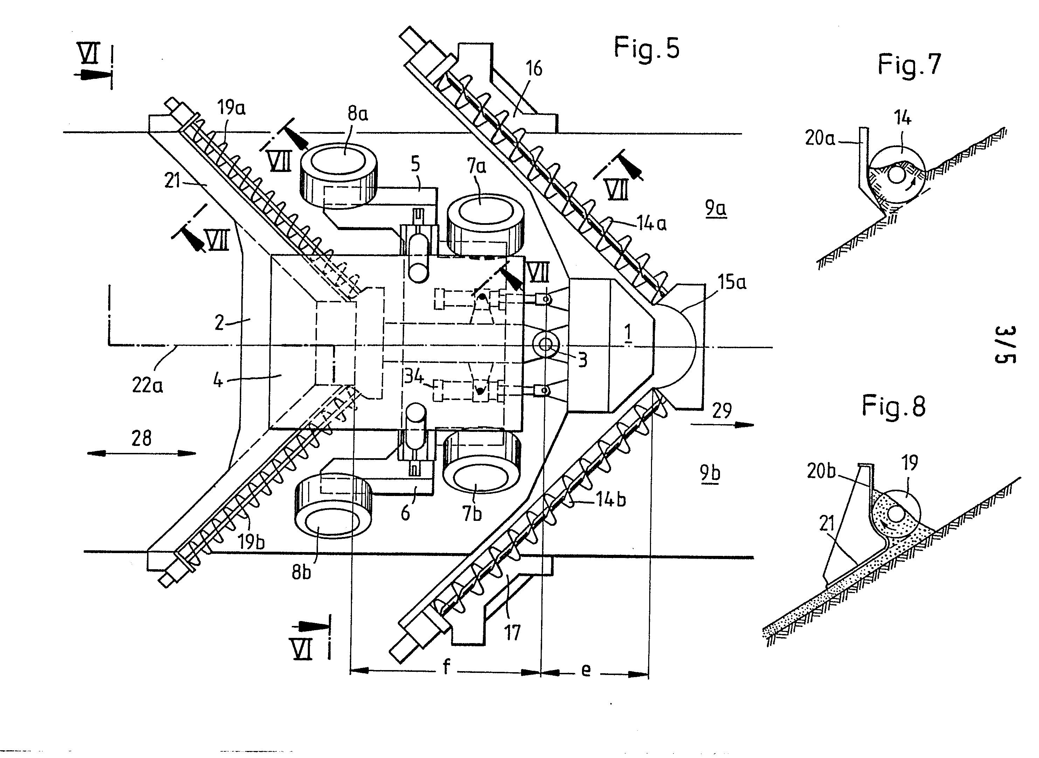

<u>Die Trägerkonstruktion</u> besteht u. a. aus den Arbeitsgeräteträgern 1 und 2
(Fig. 5), die mittels des Gelenkes 3 miteinander verbunden sind. Der Wagenrahmen 4 trägt zwei Schwingen 5 und 6 zur Befestigung eines vorderen Stützradpaares 7a, 7b und eines hinteren Stürzradpaares 8a, 8b. Die Schwingen 5
und 6 sind in Richtung der Böschungen 9a bzw. 9b um die Zapfengelenke 10a,
10b drehgelagert (Fig. 6).

Die Bermen sind mit 11 und 12 bezeichnet. Die Arbeitsgeräteträger 1 und 2
sind im Gelenk 3 winklig zueinander (d. h. unter Bildung eines Winkels $\gamma$
der Längsachsen 22a der Arbeitsgeräteträger 1 und 2) derart einstellbar, daß
eine einwandfreie Arbeitsweise in den Kurvenstrecken ermöglicht wird. Hierbei
wird durch die Pfeilform der Arbeitsgeräteträger 1 und 2 eine geringfügige
Abweichung der Profilform des Wasserkanals bewirkt, die aber aus
kanalbautechnischer Sicht ohne erkennbare Nachteile hingenommen werden kann.

Es handelt sich bei dieser Abweichung lediglich darum, daß aufgrund fest
vorgegebener geometrischer Verhältnisse die Auskleidungsschicht 13 (Fig.
4) auf der an der Kurveninnenseite liegenden Böschung 9a eine leichte
Krümmung nach unten aufweisen und analog dazu die Böschung 9b der Außenseite eine entsprechend leichte Wölbung nach oben haben wird. Konkret
stimmt dieser Krümmungsradius in der Böschungsfläche etwa mit dem
Radius der Kurvenstrecke überein.

In der Zeichnung sind die Profilverhältnisse für einen Krümmungsradius von
35 m dargestellt.

Die dazu fest vorgegebenen geometrischen Verhältnisse sind durch folgende
Maße beeinflußt:

e = Abstand zwischen Gelenk 3 und Arbeitslinie i - i (Fig. 2)
f = Abstand zwischen Gelenk 3 und Arbeitslinie j - j (Fig. 2)
$\varsigma$ = Radius der Kurvenstrecke
$\gamma$ = Ausschwenkwinkel zwischen den beiden Arbeitsgeräteträgern 1 und 2

Gemäß der Zeichnung, Fig. 3, ergibt sich aus den geometrischen Bedingungen
die Übereinstimmung zwischen den beiden Arbeitsgeräteträgern, in dem der
Ausschwenkwinkel $\gamma$ folgender Gleichung entsprechend eingestellt wird:

. . . . .

$$e + f \cos \gamma = \varsigma \cdot \sin \gamma \qquad (1)$$

Die Auflösung nach $\gamma$ lautet dazu:

$$\tan \frac{\gamma}{2} = \frac{\varsigma \pm \sqrt{\varsigma^2 - (e+f)(e-f)}}{e - f} \qquad (2)$$

Im wesentlichen ergibt sich aus diesem an den Kurvenradius $\varsigma$ angepaßten Ausschwenkwinkel $\gamma$ die erforderliche Lenkwirkung durch die Geometrie der Arbeitsgeräte dahingehend, daß die bisher angewandte Knicklenkung in Fortfall kommen kann. Diese Zusammenhänge ermöglichen zugleich die paarweise Anordnung der Einzelräder 7a, 7b; 8a, 8b auf den Schwingen 5 bzw. 6.

Eine in statischer Hinsicht günstige Lösung entsteht, wenn der Abstand "e" dahingehend gewählt wird, daß die Mitte des Gelenkes 3 möglichst nahe am Schwerpunkt der Planiervorrichtung angeordnet ist.

Die Planiervorrichtung befindet sich am Arbeitsgeräteträger 1. Sie trägt den überschüssigen Boden des grob ausgehobenen Profils 18 ab und stellt ein ebenes Feinplanum her. Anstelle der bekannten üblichen Palettenketten sind zwei Schneckenfräser 14a und 14b in Pfeilform angeordnet. Die Kanalsohle 15 wird je nach Bodenverhältnissen mit einem Formschild 15a oder ebenfalls mit einem Schneckenfräser hergestellt. Das gelöste Material wird durch die Schneckenfräser 14, nämlich 14a und 14b, auf der Böschung 9a bzw. 9b nach beiden Seiten transportiert und über den Bermen 11 und 12 ausgetragen. An den Böschungen 9a, 9b entsteht infolge der pfeilförmigen Anordnung der Schneckenfräser 14a und 14b und der gegenüber der Querförderung verminderten Steilheit des Materialförderstromes ein Schnecken-Fördereffekt, der den Abtransport des losgelösten Materials ("Abraum") erheblich begünstigt und ausreichend gewährleistet. Der Förderweg über die Böschungen hinaus ist durch die entsprechende Verlängerung der Schneckenfräser 14a und 14b zusammen mit den Materialführungen 16 und 17 gewährleistet.

Die Materialführung für den Abraum ist in Fig. 7 mit 20a bezeichnet.

. . . . .

<u>Die Einbauvorrichtung</u> befindet sich an dem Arbeitsgeräteträger 2, was eine notwendige Übereinstimmung mit der Planiereinrichtung in der Profilform erfordert. Hierbei wird mit Rücksicht auf die Arbeiten in Kurvenstrecken von der Einbauvorrichtung ein kongruentes Anpassen in den formbildenden Elementen an die Planiervorrichtung gefordert.

Insbesondere werden zur Vereinfachung der anzuwendenden Kinematik die jeweiligen Neigungen zwischen den drei Hauptachsen der beiden Arbeitsgeräteträger 1 und 2 einerseits und den Meßlinien des herzustellenden Kanals andererseits jeweils einheitlich aufeinander abgestimmt.

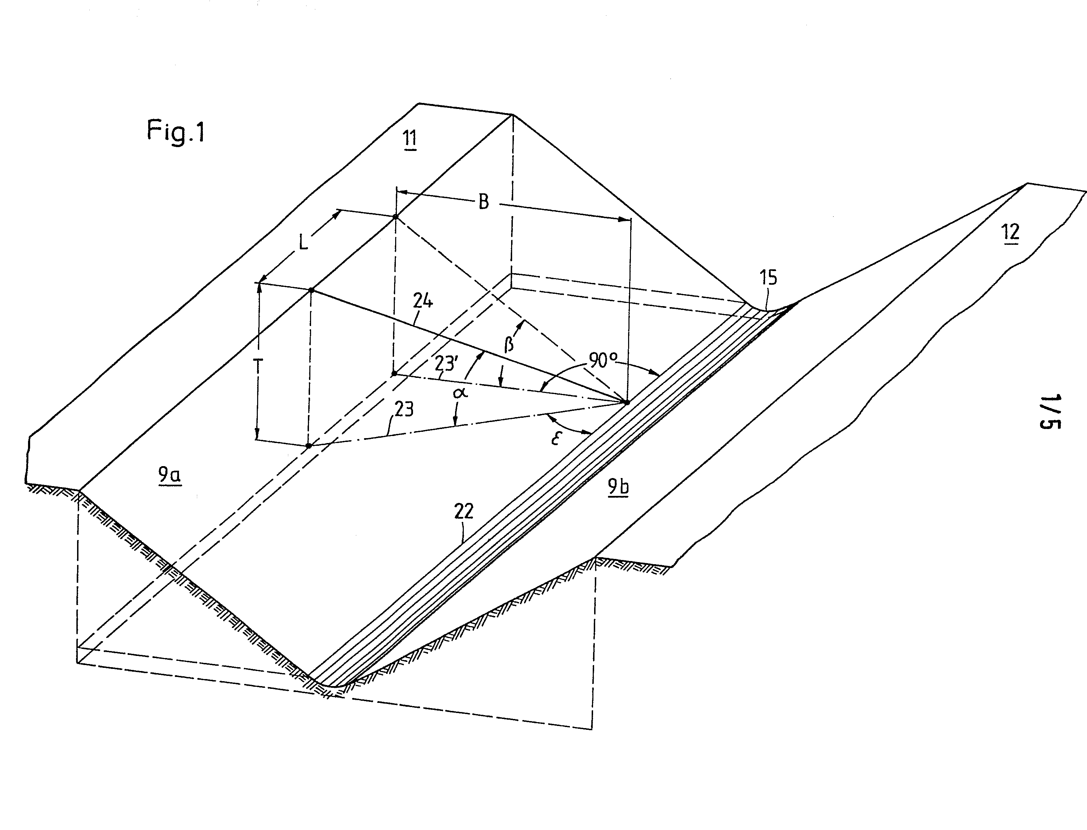

Gemäß Fig. 1 werden folgende Bezeichnungen verwendet:

$$B = \text{Breite der Böschung}$$
$$T = \text{Tiefe der Böschung}$$
$$L = \text{Schräglage des Arbeitsgeräteträgers}$$

Im vorliegenden Beispiel wird von den Verhältnissen

$$B : T : L = 1 : 1 : 2 \qquad (3)$$

ausgegangen.

Hierbei ergibt sich für die Oberflächenbreite O und die Arbeitsgerätelänge A eine Relation von

$$\frac{A}{O} = \frac{\sqrt{6}}{\sqrt{2}} = \sqrt{3} \qquad (4)$$

die für jedes geänderte Verhältnis

$$B : T = m \qquad (5)$$

gilt.

. . . . .

Bei der Einbauvorrichtung besteht das Arbeitswerkzeug aus den Förderschnecken 19, nämlich 19a bzw. 19b, bei paarweiser Anordnung am
Arbeitsgeräteträger 2. der Arbeitsgeräteträger 2 weist ferner eine
seitliche Materialführung 20 und eine Gleitschalung 21 auf. Materialführung
20b und Gleitschalung 21 werden besonders vereinfacht, weil mit der
pfeilförmigen Anordnung die Abstützung des Auskleidungsmaterials zur
Kanalsohle 15 hin durch das Zusammenwirken von Förderschnecke 19a (19b),
Materialführung 20b und Gleitschalung 21 und dem unter der Gleitschalung 21
zur Ruhe gekommenen Auskleidungsmaterial außerordentlich verstärkt wird und
es darüber hinaus möglich ist, die erforderliche Behandlung des
Auskleidungsmaterials durch mehr oder weniger intensive Vibration der
Förderschnecke 19a (19b) vorzunehmen.

Gemäß Fig. 1 ist der Böschungswinkel senkrecht zur Kanallängsachsenparallelen 22 mit $\beta$ bezeichnet. Der Winkel $\nu$ bezeichnet zusammen mit der
Horizontalen 23 den Winkel der Böschungslinie 24. In Fig. 2 sind demgemäß,
da an den Böschungsflächen 9a und 9b gleichzeitig gearbeitet wird, vier
Böschungslinien 24 vorhanden. Der Winkel $\varepsilon$ wird durch die Horizontale 23
bzw. die Kanallängsachsenparallele 22 gebildet (Figuren 1 und 2).

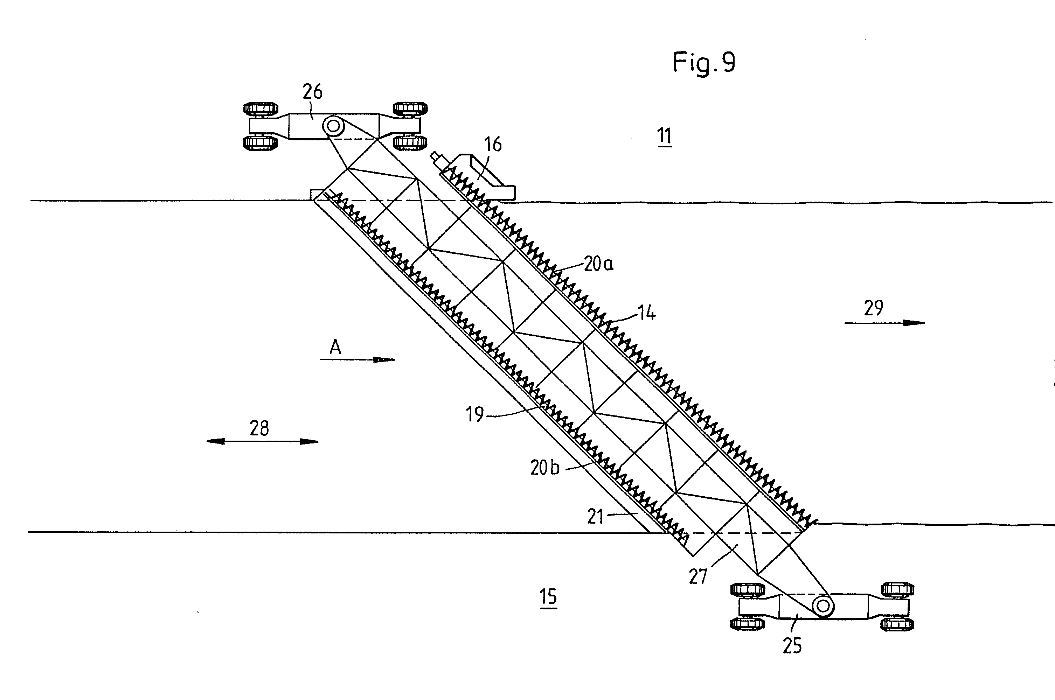

Gemäß Fig. 9 ist eine Alternative zu den Ausführungsformen der erfindungsgemäßen Kanalbaulängsmaschine gemäß den Fig. 5 bzw. 6 gezeichnet. Es
wird lediglich auf der Böschungsfläche 9b gearbeitet. Zu diesem Zweck ist
ein erstes Fahrwerk 25 auf der Kanalsohle 15 vorgesehen und ein zweites
Fahrwerk 26 auf der Berme 11. Beide Fahrwerke 25 und 26 weisen entsprechende Fahrwerksantriebe auf, die nicht näher dargestellt sind. An dem Arbeitsgeräteträger 27 sind in Kanallängsrichtung 28 aufeinanderfolgend und etwa
parallel zueinander verlaufend ein Schneckenfräser 14 in Fahrtrichtung 29
sowie eine Förderschnecke 19 mit seitlicher Materialführung 20 bzw. Gleitschalung 21 befestigt.

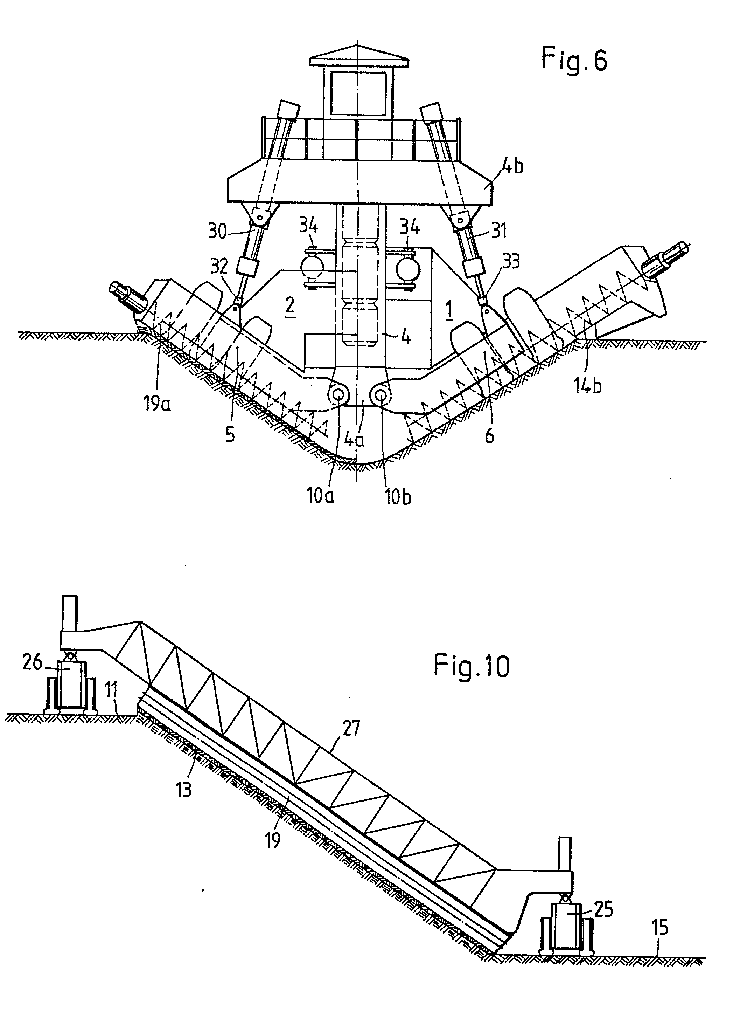

Die Alternative gemäß Fig. 9 ist in Fig. 10 verdeutlicht. Hierbei ist die
Blickrichtung gemäß A (Fig. 9) dargestellt, d. h. in der Fahrtrichtung 29.
In Blickrichtung A sind der Arbeitsgeräteträger 27 und die Förderschnecke
19 zu erkennen.

. . . . .

Im Ausführungsbeispiel gemäß Fig. 6 ist links die Einbauvorrichtung mit der Förderschnecke 19a und rechts die Planiervorrichtung mit dem Schneckenfräser 14b gezeigt. Die Schwingen 5 und 6 sind mittels der Zapfengelenke 10a, 10b an dem zentralen Wagenrahmenteil 4a angelenkt, an dessen Oberteil 4b hydraulisch betätigbare Kolben-Zylinder-Antriebe 30, 31 schwenkbar in der vertikalen Ebene gelagert sind. Deren Kolbenstangen 32 bzw. 33 greifen ebenfalls gelenkig an den Schwingen 5 und 6 an.

Ebenfalls sind in den Fig. 5 und 6 die zur Einstellung des Winkels $\gamma$ erforderlichen Kolbenyzlinder 34 dargestellt. Dieselben sind in Übereinstimmung mit dem jeweiligen Kurvenradius $\varsigma$ um ihre horizontale Lage einstellbar und stellen daraufhin die Lenkgeometrie der Maschine sicher.

Mannesmann Aktiengesellschaft

Mannesmannufer 2

4000 Düsseldorf

27. April 1981

21 024 - Fl/Schi

---

Verfahren und Kanalbaulängsmaschine zum Einbauen von Auskleidungen
in Wasserkanälen, z. B. in Bewässerungskanälen

---

## Patentansprüche

1. Verfahren zum Einbauen von Auskleidungen in Wasserkanälen, z. B.
in Bewässerungskanälen, bei dem zum Planieren der Oberfläche sowie zum
Verteilen, Verdichten und Glätten des eingebrachten Auskleidungsmaterials die Kanalbaumaschine in Kanallängsrichtung bewegt wird,
dadurch gekennzeichnet,
daß das Planieren und/oder das Verteilen, Verdichten sowie das Glätten
des Auskleidungsmaterials an zumindest einer der Böschungsflächen (9a,9b)
jeweils kontinuierlich auf einer Böschungslinie (24) erfolgt, die in einem
Winkelbereich ($\iota$) von etwa 15 bis 45° zur Horizontalen (23) liegt, wobei
die zugehörigen Böschungswinkel ($\beta$) senkrecht zur Kanallängsachsenparallele (22) im Winkelbereich von etwa 20° bis 60° zur Horizontalen (23')
liegen.

. . . . .

2.  Verfahren nach Anspruch 1,

    dadurch gekennzeichnet,

    daß auf der Böschung (9a bzw. 9b) quer zur Kanallängsachsenparallelen
    (22) die tieferliegende Auskleidung vor der höherliegenden Auskleidung
    aufgetragen wird.

3.  Verfahren nach den Ansprüchen 1 und 2,

    dadurch gekennzeichnet,

    daß das Material auf der schrägen Böschungslinie (24) von unten nach oben
    oder umgekehrt gefördert wird.

4.  Kanalbaulängsmaschine zur Durchführung des Verfahrens nach den
    Ansprüchen 1 bis 3,

    dadurch gekennzeichnet,

    daß zumindest zwei Arbeitsgeräteträger (1,2) mit ihren Arbeitswerkzeugen (14a,19a;14b,19b) auf der von unten nach oben schräg ansteigenden
    Böschungslinie (24) in Kanallängsrichtung (28) im Abstand aufeinander-
    folgend und auf geraden Kanalstrecken parallel zueinander verlaufend
    angeordnet sind.

5.  Kanalbaulängsmaschine nach Anspruch 4,

    dadurch gekennzeichnet,

    daß der in Fahrtrichtung (29) erste Arbeitsgeräteträger (1) um einen
    Gelenkpunkt (3) im Winkel ($\alpha$) zur Längsachse (22a) des nachfolgenden
    Arbeitsgeräteträgers (2) einstellbar ist.

6.  Kanalbaulängsmaschine nach den Ansprüchen 4 und 5,

    dadurch gekennzeichnet,

    daß Paare von Arbeitsgeräteträgern (1,2) in Pfeilform angeordnet
    und mittels des Gelenkes (3) miteinander verbunden sind.

. . . . .

7. Kanalbaulängsmaschine nach den Ansprüchen 4 bis 6,
   dadurch gekennzeichnet,
   daß der Ausschwenk-Winkel ($\gamma$) zwischen Paaren von Arbeitsgeräteträgern (1,2) gemäß der Formel

$$\tan \frac{\gamma}{2} = \frac{\varrho \pm \sqrt{\varrho^2 - (e+f)(e-f)}}{e - f}$$

   festgelegt ist, wobei (jeweils auf den Kanalgrundriß bezogen)
   bedeuten:

   e = Abstand zwischen dem Gelenk G und der Arbeitslinie i-i (Fig. 3)

   f = Abstand zwischen dem Gelenk G und der Arbeitslinie j-j (Fig. 3)

   $\varrho$ = Radius der Kurvenstrecke

   $\gamma$ = Ausschwenk-Winkel zwischen Paaren von Arbeitsgeräteträgern, um
       eine gleichbleibende Auskleidungsdicke in Kurven an den Böschungen
       zu ermöglichen.


8. Kanalbaulängsmaschine nach den Ansprüchen 4 bis 7,
   dadurch gekennzeichnet, daß der Gelenkpunkt (3) mit dem Schwerpunkt
   des in Fahrtrichtung (29) ersten Arbeitsgeräteträger-Paares bei entsprechend festgelegten Werten für "e" und "f" zusammenfällt.


9. Kanalbaulängsmaschine nach den Ansprüchen 4 bis 8,
   dadurch gekennzeichnet,
   daß die Fahrwerke (7a,7b;8a,8b) zwischen den aufeinanderfolgenden Arbeitsgeräteträgern (1,2) angeordnet sind.


10. Kanalbaulängsmaschine nach den Ansprüchen 4 bis 9,
    dadurch gekennzeichnet,
    daß die Arbeitswerkzeuge zum Planieren aus langgestreckten Schneckenfräsern
    (14a,14b) und Materialführungen (16,17) bestehen.

. . . . .

11. Kanalbaulängsmaschine nach den Ansprüchen 4 bis 10,
    dadurch gekennzeichnet,
    daß die Schneckenfräser (14a,14b) und die Materialführungen (16,17)
    über die Kanalberme (11 bzw.12) hinaus verlängert sind.

12. Kanalbaulängsmaschine nach den Ansprüchen 4 bis 11,
    dadurch gekennzeichnet,
    daß zum Verlegen bzw. Verdichten des Auskleidungsmaterials
    Förderschnecken (19,19a,19b) vorgesehen sind.

13. Kanalbaulängsmaschine nach den Ansprüchen 4 bis 12,
    dadurch gekennzeichnet,
    daß die Förderschnecken (19,19a,19b) mit einem Vibrationsantrieb
    verbindbar sind, der Schwingungen in Achsrichtung überträgt.

. . . . .

Fig.1

Fig. 2

Fig. 3

Fig. 4

2/5

0071074

Fig. 5

Fig. 7

Fig. 8

3/5

0071074

Fig. 9

0071074

Fig.6

Fig.10